# EUROPÄISCHE PATENTSCHRIFT

(11) **EP 1 648 581 B1**
(45) Veröffentlichungstag und Bekanntmachung des Hinweises auf die Patenterteilung: **01.09.2010**
(21) Anmeldenummer: 04739597.5
(22) Anmeldetag: 04.06.2004
(51) Int. Cl.: B01D 11/04, B01F 5/06, B01F 3/04

(54) **EXTRAKTIONSVERFAHREN UNTER VERWENDUNG EINES STATISCHEN MIKROMISCHERS**
EXTRACTION METHOD USING A STATIC MICROMIXER
PROCEDE D'EXTRACTION FAISANT INTERVENIR UN MICRO-MELANGEUR STATIQUE

(30) Priorität: 25.07.2003 DE 10333921
(43) Veröffentlichungstag der Anmeldung: 26.04.2006
(73) Patentinhaber: The Procter and Gamble Company, Cincinnati, Ohio 45202 (US)
(72) Erfinder: SCHANZ, Gerhard, 64295 Darmstadt (DE); SENDELBACH, Gerhard, 64297 Darmstadt (DE)
(86) Internationale Anmeldenummer: PCT/EP2004/006043
(87) Internationale Veröffentlichungsnummer: WO 2005/018772

(56) Entgegenhaltungen:
- WO-A-02/16017
- WO-A-02/089962
- US-A1- 2003 039 169
- PATENT ABSTRACTS OF JAPAN Bd. 2003, Nr. 05, 12. Mai 2003 (2003-05-12) & JP 2003 001077 A (MINOLTA CO LTD), 7. Januar 2003 (2003-01-07)

## Beschreibung

Gegenstand der Erfindung ist ein Verfahren zur Extraktion einer oder mehrerer Substanzen aus einem fluiden Ausgangsmaterial mit einem geeigneten Extraktionsmittel unter Verwendung eines statischen Mikromischers zur Vermischung des Ausgangsmaterials mit dem Extraktionsmittel.

Bei der Extraktion wird ein Lösemittel (Extraktionsmittel) zur Abtrennung einer oder mehrerer Komponenten aus einem Stoffgemisch benutzt. Fluide Stoffgemische können flüssig oder gasförmig sein. Unter Extraktion wird im allgemeinen die Anreicherung oder Gewinnung von Stoffen aus Flüssigkeitsgemischen mit Hilfe von selektiv wirkenden nichtmischbaren Lösemitteln verstanden. Es können aber auch Stoffe aus gasförmigen Gemischen mittels geeigneter Lösemittel extrahiert werden.

Extraktionsverfahren spielen insbesondere dann eine Rolle, wenn thermische Verfahren wie die Destillation ungeeignet sind. Extraktionsverfahren können z.B. angewendet werden bei der Trennung von Systemen mit ähnlichen Siedepunkten, z.B. der Aromatenextraktion aus Kohlenwasserstoffen, z.B. Erdölfraktionen; Abtrennung von hochsiedenden Stoffen aus wässrigen Systemen (z.B. Phenole); Abtrennung von temperaturempfindlichen Stoffen, z.B. biologische oder biotechnologisch gewonnene Stoffe (z.B. Antibiotika aus Fermentationslösungen); Trennung azeotroper Mischungen; Extraktion von organischen Stoffen aus Salzlösungen; Extraktion von Salzen aus Polymerlösungen; Extraktion von Metallsalzen aus Erzen zur Metallgewinnung oder aus Abwasser zur Abwasserreinigung, z.B. Extraktion von Kupfer, Nickel und Kobalt aus wässrigen Salzlösungen mit in Kerosin gelösten Hydroxyoximen; Aufarbeitung von Kernbrennstoffen, z.B. Extraktion von Uran-, Plutonium- und Thoriumsalzen durch Tributylphosphat; oder generell als Reinigungsoperation in der chemischen Verfahrenstechnik.

Die Fluidextraktion basiert auf dem Verteilungsgleichgewicht der zu extrahierenden Stoffe zwischen zwei nicht mischbaren fluiden Phasen. Eine zu extrahierende Komponente (Extraktstoff) liegt in einem fluiden Trägermedium gelöst oder dispergiert vor. Ein mit dem Trägermedium nicht mischbares Lösemittel (Extraktionsmittel) besitzt eine in der Regel möglichst hohe Selektivität für den Extraktstoff. Trägermedium und Extraktionsmittel werden miteinander kontaktiert und es stellt sich idealerweise ein Verteilungsgleichgewicht für die Verteilung des Extraktstoffes zwischen Trägermedium und Extraktionsmittel ein. Nach Phasentrennung ist das gebildete Raffinat an Extraktstoff abgereichert und der gebildete Extrakt ist an Extraktstoff angereichert. Häufig reicht ein einziger Gleichgewichtsschritt für die gewünschte Anreicherung nicht aus, weil die Gleichgewichsteinstellung nicht vollständig oder die Selektivität nicht ausreichend war. Es kann dann mit mehreren, hintereinandergeschalteten Trennstufen gearbeitet werden. Um einen möglichst effizienten Stoffaustausch zwischen den nicht mischbaren fluiden Phasen zu bewirken, muß eine möglichst große Phasengrenze geschaffen werden. Zu diesem Zweck wird in Extraktionsapparaturen in der Regel eine der beiden Phasen in Tropfen verteilt, d.h. es wird ein Gemisch einer dispersen Phase und einer kontinuierlichen Phase erzeugt. Welche der beiden Phasen dispergiert wird, hängt von mehreren Faktoren ab, z.B. Stoffeigenschaften, Mengen der Phasen oder Bauart der Extraktionsapparatur. Im allgemeinen wird die Phase dispergiert, welche die größere Oberfläche liefert; meist die Phase mit dem größeren Mengenstrom. Eine Verteilung der Phasen ist insbesondere dann schwierig, wenn Phasen mit hoher Grenzflächenspannung eingesetzt werden. Hohe Grenzflächenspannung ist andererseits wünschenswert, um die Bildung schwer entmischbarer Emulsionen zu verhindern.

Aufgabe der Erfindung war es, Extraktionsverfahren weiter zu verbessern, insbesondere im Hinblick auf eine effiziente Vermischung von Trägermedium und Extraktionsmittel.

Es wurde nun gefunden, dass die Verwendung von statischen Mikromischern besonders gut geeignet ist zur Vermischung von Trägermedium und Extraktionsmittel in Extraktionsverfahren. Gegenstand der Erfindung ist daher ein Verfahren zur Durchführung von Extraktionen gemäß Anspruch 1

Vorteile der Verwendung der statischen Mikromischer sind die Verkleinerung der Extraktorgröße und damit Integrierbarkeit in weitere Systeme. Es wird bei relativ geringen Druckverlusten eine schnelle und intensive Durchmischung ermöglicht bei kleinem Bauraum und einfacher Herstellung der benötigten Bauteile. Die Mikromischer können mit einem Abscheider in einer Mischer/Abscheider-Einheit integriert sein, ein Abscheider kann aber auch separat nachgeschaltet werden. Durch das Zusammenwirken bzw. Hintereinanderschalten zweier oder mehrerer integrierter oder separater Mischer/Abscheider-Einheiten in einer Mischer/Abscheider-Batterie auf engem Raum ergeben sich weitere Möglichkeiten der Prozessoptimierung, insbesondere hinsichtlich der Erreichung des gewünschten An- bzw. Abreicherungsgrades. Die mit den erfindungsgemäß eingesetzten statischen Mikromischern erzielbare effiziente Bildung von großen Grenzflächen insbesondere auch bei Vermischung von Fluiden mit hoher Grenzflächenspannung, unterstützt die Einstellung des Verteilungsgleichgewichts. Es können Mischzeiten zwischen 1 s und wenigen Millisekunden erzielt werden.

Eine Klasse von bekannten Mikromischern beruht auf diffusionskontrollierten Mischvorgängen. Hierfür werden abwechselnd benachbarte Fluidlamellen einer Stärke im Mikrometerbereich erzeugt. Durch die Wahl der Geometrie ist ein Einstellen der Breite der Fluidlamellen und damit der Diffusionswege möglich. Derartige statische Mikromischer werden z.B. beschrieben in DE 199 27 556 A1, DE 202 06 371 U1, WO 02/089962. Nachteil der auf Diffusion zwischen mikroskopischen Fluidlamellen beruhender Mikromischer ist, dass eine relativ geringe Strömungsgeschwindigkeit zur Erzeugung und Aufrechterhaltung laminarer Strömungsverhältnisse erforderlich ist. Mit diesem Mischprinzip sind nur relativ geringe Durchsätze möglich.

Außerdem sind Mikromischer bekannt, die aus mit durchgehenden Kanälen versehenen Führungsbauteilen oder mit Nuten versehenen Folien bestehen, die beim Übereinanderschichten eine Anzahl von Kanälen für die verschiedenen, zu vermischenden Fluide ergeben, wobei die Dimensionen der Kanäle im Mikrometerbereich liegen. Die Eduktströme treten als benachbarte Fluidlamellen aus den Kanälen in einen Mischraum aus, wobei die Vermischung durch Diffusion und/oder Turbulenz erfolgt (siehe insbesondere WO 97/17130 und dort zitierte Literatur sowie WO 97/17133, WO 95/30475, WO 97/16239, WO 00/78438). Die Herstellung dieser Bauteile ist relativ teuer und aufwändig und es können bei der Durchleitung der zu mischenden Fluide durch eine Vielzahl langer und sehr schmaler Kanäle relativ hohe Druckverluste auftreten. Dies kann den Einsatz starker Pumpsysteme erforderlich machen, wenn hohe Durchsätze erreicht werden sollen.

Ein Verfahren gemäß dem Oberbegriff von Anspruch 1 ist in der Schrift WO-A-02/16017 offenbart.

Unter dem Begriff "Fluid" wird ein gasförmiger oder flüssiger Stoff oder ein Gemisch solcher Stoffe verstanden, das einen oder mehrere feste, flüssige oder gasförmige Stoffe gelöst oder dispergiert enthalten kann.

Der Begriff "Teilkanäle" umfaßt auch eine Aufspaltung des Fluidstroms in Teilströme durch Mikrostruktureinbauten unmittelbar vor dem Austritt in die Mischzone. Die Dimensionen, insbesondere die Längen und Breiten dieser Einbauten können dabei im Bereich von Millimetern liegen oder vorzugsweise kleiner 1 mm betragen. Die Teilkanäle sind vorzugsweise auf die zur Strömungskontrolle absolut nötige Länge verkürzt und erfordern daher für einen bestimmten Durchsatz vergleichbar geringe Drücke. Vorzugsweise liegt das Verhältnis der Länge zur Breite der Teilkanäle im Bereich von 1:1 bis 20:1, insbesondere von 8:1 bis 12:1, besonders bevorzugt etwa 10:1. Die Mikrostruktureinbauten sind vorzugsweise so ausgestaltet, dass die Strömungsgeschwindigkeit des Fluidstroms bei Austritt in die Mischzone sowohl größer ist als bei Eintritt in den Verbindungskanals und vorzugsweise auch größer ist als die Strömungsgeschwindigkeit der Mischung durch die Mischzone.

Die auf den Platten aufgebrachten Verbindungs- und Teilkanäle sind in Freiform ausführbar. Sowohl die Platten als auch jeder darauf enthaltene einzelne Kanal können in Höhe, Breite und Dicke variieren, um auch unterschiedliche Medien und Mengen fördern zu können. Die Grundform der Platten ist beliebig und kann rund z.B. kreisförmig oder elliptisch oder eckig, z.B. rechteckig oder quadratisch sein. Die Plattenform kann auch in Bezug auf eine möglichst einfache Herstellung oder in Bezug auf ein möglichst geringes Gewicht und eine möglichst geringe ungenutzte Fläche optimiert sein. Die Ausgänge der Teilkanäle können in jeder beliebigen Weise angeordnet sein, von der geraden Linie bis zur beliebigen geometrischen Form. Die Austrittsöffnungen können z.B. auf einer kreisförmigen Linie angeordnet sein, insbesondere wenn die Mischzone von der Plattenebene vollständig umschlossen vorliegt. Es lassen sich zwei bzw. mehr als zwei Komponenten (A, B, C usw.) in einer Scheibe führen und diese mit gleichen oder unterschiedlichen Mengenverhältnissen mischen. Die Teilkanäle können zueinander oder bezogen auf die Linie, auf der die Ausgänge in die Mischzone liegen, in beliebigen Winkeln verlaufen. Es können mehrere Teilkanäle nebeneinander angeordnet werden, die jeweils z.B. Komponente A führen und im benachbarten Abschnitt derselben Scheibe können mehrere Teilkanäle nebeneinander angeordnet werden, die jeweils z.B. Komponente B führen. Die Bauteile können mittels zusätzlicher Durchbrüche und zusätzlicher Teilkanäle in den Platten jedoch auch so gestaltet sein, dass sich von Teilkanal zu Teilkanal die Komponenten A, B usw. in derselben Platte abwechseln.

Die Teilkanäle weisen an der Mündung in die Mischzone bevorzugt eine Breite im Bereich von 1 µm bis 2 mm sowie eine Tiefe im Bereich von 10 µm bis 10 mm und besonders bevorzugt eine Breite im Bereich von 5 µm bis 250 µm sowie eine Tiefe im Bereich von 250 µm bis 5 mm auf.

Der Verbindungskanal kann eine variable Breite haben. Vorzugsweise ist das Verhältnis der größten Breite des Verbindungskanals und/oder der Breite der Eintrittsöffnung zur Breite der Teilkanäle an deren Austritt in die Mischzone größer 2, besonders bevorzugt größer 5. Das Verhältnis der Breite der Mischzone zur Breite der Teilkanäle ist vorzugsweise größer 2, besonders bevorzugt größer 5.

Die plattenförmigen Bauteile können eine Dicke von 10 bis 1000 µm haben. Die Höhe der Kanäle ist vorzugsweise kleiner 1000 µm, besonders bevorzugt kleiner 250 µm. Die Wanddicke der Mikrostruktureinbauten und des Kanalbodens ist vorzugsweise kleiner 100 µm, besonders bevorzugt kleiner 70 µm.

In einer besonderen Ausführungsform ist mindestens eine der Eintritts- oder Austrittsöffnungen oder die Mischzone von der Plattenebene vollständig umschlossen. Die Öffnungen liegen dann z.B. als runde oder eckige, z.B. rechteckige Ausnehmungen vor. Im Falle einer umschlossenen Mischzone ist die bevorzugte Form ellipsen- oder kreisförmig. Die Teilkanäle können sich in Form von Düsen in Richtung der Mischzone verjüngen. Die Teilkanäle können geradlinig oder spiralförmig gebogen sein. Die Teilkanäle können rechtwinklig in Bezug auf die Umfangslinie der Mischzone in die Mischzone münden oder in einem von 90° verschiedenen Winkel. Bei nicht rechtwinkligem Verlauf sind bei der Bildung eines Stapels aus mehreren Mischerplatten vorzugsweise jeweils Platten mit entgegengesetzter Abweichung vom rechten Winkel benachbart. Ebenso sind bei spiralförmigem Verlauf der Teilkanäle bei der Bildung eines Stapels aus mehreren Mischerplatten vorzugsweise jeweils Platten mit entgegengesetzter Drehrichtung der Spirale benachbart.

Vorteilhaft ist auch, wenn die Teilkanäle einen gebogenen Verlauf in der Art aufweisen, dass den Zuflüssen in die Mischzone dieselbe Drehrichtung gegeben wird und sich innerhalb des Mischstroms ein starker Drall ausbildet, der zur Folge hat, dass ein Zentrifugal-Effekt entsteht. Die schwerere der flüssigen Komponenten wird sich bevorzugt am äußeren Rand des die Mischzone durchströmenden Mischstroms aufhalten und die leichtere Komponente in der Mitte des Mischstroms. Wenn sich das zu extrahierende Gut in der schwereren Phase befindet, kommt es auf diese Weise zu einer besonders innigen Vermischung mit der leichteren Phase, die aus den die Wandung des Hauptkanales bildenden Mikrokanälen zuströmt. Auf diese Weise kann die theoretische Bodenzahl einer Extraktion gesteigert werden. Ein derartiger, statischer Zentrifugalextraktor weist Vorteile eines Rotationsextraktors auf, ohne auf dessen aufwändige und störanfällige Mechanik angewiesen zu sein.

Der Verbindungskanal zwischen den Öffnungen ist vorzugsweise durch eine Vertiefung ausgebildet. Die Eintritts- und/oder Austrittsöffnung oder die Mischzone können aber auch am Plattenrand oder durch Aussparungen am Plattenrand angeordnet sein.

In einer weiteren besonderen Ausführungsform sind mindestens zwei Eintrittsöffnungen für mindestens zwei verschiedene Fluidströme vorhanden, wobei jede Eintrittsöffnung durch je einen Verbindungskanal mit der Mischzone verbunden ist. Dabei liegen vorzugsweise zwei Austrittsöffnungen für zwei verschiedene Fluide an gegenüberliegenden Seiten der Mischzone, wobei die Mischzone vorzugsweise vollständig umschlossen innerhalb der Plattenebene positioniert ist.

Als Material für die Bauteile eignen sich z.B. Metalle, insbesondere korrosionsbeständige Metalle wie z.B. Edelstahl, sowie Gläser, Keramik oder Kunststoff. Die Bauteile können hergestellt werden durch an sich bekannte Techniken zur Erzeugung von Mikrostrukturen auf Oberflächen, z.B. durch Ätzen oder Fräsen von Metallen oder durch Prägen oder Spritzen von Kunststoffen.

Ein erfindungsgemäß eingesetzter statischer Mikromischer weist ein Gehäuse mit mindestens 2 Fluidzuführungen und mindestens einer Fluidabführung auf. In dem Gehäuse befinden sich mindestens 2 zu einem Stapel angeordnete plattenförmige Mikromischerbauteile. Aus einer beliebigen Anzahl an Platten können Stapel erzeugt werden, die einen der Stapelhöhe entsprechenden Durchfluß realisieren lassen. Um an jeder Stelle des Mischers denselben Druck zu gewährleisten, kann bei größeren Längen die Fluidzufuhr an mehreren Stellen erfolgen. Nuten oder Stege in bzw. auf den Platten können der Stapel- und Justierbarkeit dienen. Die Platten liegen so übereinander, dass die Eintrittsöffnungen Nebenkanäle zum Zuführen des jeweiligen Träger- bzw. Extraktionsfluids und die Austrittsöffnungen bzw. die Mischzonen zusammen einen Hauptkanal zum Abführen der Fluidmischung bilden und sich die Haupt- und Nebenkanäle durch den Stapel erstrecken. Wenn die Eintrittsöffnungen als Aussparungen am Plattenrand angeordnet sind, bildet die Gehäusewand einen den jeweiligen Nebenkanal nach außen abschließenden Teil der Nebenkanalwand. Wenn die Mischzone als Aussparung am Plattenrand angeordnet ist, bildet die Gehäusewand einen den Hauptkanal nach außen abschließenden Teil der Hauptkanalwand. Insgesamt kann der Mikromischer z.B. mindestens 5, 10, 100 oder auch mehr als 1000 Teilkanäle aufweisen und besteht aus einem Stapel von mit jeweils mehreren Teilkanälen aufweisenden Platten.

Vorzugsweise ist jeder aus einer Austrittsöffnung einer Platte in die Mischzone austretende Teilstrom eines ersten Fluids A einem aus einer Austrittsöffnung einer benachbarten Platte in die Mischzone austretenden Teilstroms eines zweiten Fluids B unmittelbar benachbart und es kommt in der Mischzone zu einer Vermischung durch Diffusion und/oder Turbulenz, wobei eine Vermischung bevorzugt ist, die zumindest teilweise oder vollständig durch Turbulenz erfolgt.

In einer Ausführungsform des Mikromischers sind die Verbindungskanäle der Platten durch Vertiefungen ausgebildet und die Verbindungskanäle werden vor der Mündung in die Mischzone durch auf den Platten angebrachte Mikrostruktureinheiten in Teilkanäle aufgespalten. In einer alternativen Ausführungsform sind die Verbindungskanäle der Platten durch Ausnehmungen in den Platten gebildet, wobei die Platten als Zwischenplatten zwischen je einer Deck- und einer Bodenplatte angeordnet sind und die Verbindungskanäle vor der Mündung in die Mischzone durch an den Deck- und/oder Bodenplatten angebrachten Mikrostruktureinheiten in Teilkanäle aufgespalten werden. In die erfindungsgemäßen Mikromischer können zur Wärmezu- oder -abführung Wärmetauscher integriert sein. Dadurch kann aufgrund der Temperaturabhängigkeit der Verteilungskoeffizienten das Trennverhalten weiter optimiert werden und es lassen sich unter Kühlung Tieftemperaturextraktionen temperaturempfindlicher Stoffe durchführen.

Bei dem erfindungsgemäßen Extraktionsverfahren ist vorzugsweise die Strömungsgeschwindigkeit des Fluidstroms oder der Fluidströme in die Mischzone größer als die Strömungsgeschwindigkeit der Mischung innerhalb der Mischzone. Besonders bevorzugt sind Ausgestaltungen des Mikromischers sowie Strömungsgeschwindigkeiten, bei denen in der Mischzone Turbulenz erzeugt wird und die Mischung in der Mischzone ganz oder zumindest teilweise durch Turbulenz erfolgt.

Von zwei fluiden Phasen wird eine der Phasen (vorzugsweise die kontinuierliche Phase) durch den Hauptkanal und eine zweite Phase (vorzugsweise die zu dispergierende Phase) über einen Nebenkanal zugeführt.

Zur Erhöhung der Kapazität der erfindunsgemäßen Verfahren kann die Anzahl der Kanäle in den Platten erhöht werden oder die Anzahl der übereinandergeschichteten Platten in einem Mikromischer kann erhöht werden oder es können mehrere Mikromischer modulartig parallel zusammengeschaltet betrieben werden. Es können auch zwei oder mehrere Mikromischer in Reihe geschaltet hintereinander betrieben werden, insbesondere zur Verbesserung der Trennleistung. Dabei können Abscheider zur Trennung und Separierung der nichtmischbaren Phasen entweder in den Mikromischern integriert sein und/oder den Mikromischern als separate Einheiten nachgeschaltet sein.

Nachfolgend werden beispielhafte Ausführungsformen von erfindungsgemäß geeigneten Bauteilen und Mikromischern anhand von Zeichnungen erläutert.
- Fig. 1a-b: Mischplatten mit zwei Eintrittsöffnungen für zwei Fluidströme wobei Ein- und Austrittsöffnungen umschlossen sind
- Fig. 1c: Mischplatte wobei Ein- und Austrittsöffnungen umschlossen sind
- Fig. 1d: Mischplatte mit jeweils umschlossener Eintritts-, Durchtritts- und Austrittsöffnung
- Fig. 2a-c: Mischplatten mit drei Eintrittsöffnungen für bis zu drei gleiche oder verschiedene Fluidströme, wobei Ein- und Austrittsöffnungen umschlossen sind
- Fig. 3a-b: Mischplatten mit zwei Eintrittsöffnungen am Plattenrand für zwei Fluidströme und umschloss- ener Austrittsöffnung
- Fig. 3c-d: Mischplatten mit vier Eintrittsöffnungen am Plattenrand für bis zu vier gleiche oder ver- schiedene Fluidströme und umschlossener Aus- trittsöffnung
- Fig. 4a-f: Mischplatten mit umschlossener Eintrittsöffnung und umschlossener Durchtrittsöffnung für zwei Fluidströme und Austrittsöffnung am Plattenrand
- Fig. 5a-b: Mischplatten mit umschlossener Eintrittsöffnung und zwei umschlossenen Durchtrittsöffnungen für bis zu drei verschiedene Fluidströme und Aus- trittsöffnung am Plattenrand
- Fig. 6a: Längsschnitt des schematischen Aufbaus eines statischen Mikromischers
- Fig. 6b: Mischerscheibe in einem offenen Gehäuse
- Fig. 7a-b: Mischplatten mit umschlossenen Ein- und Durch- trittsöffnungen und zusätzlichen Teilkanälen, wobei benachbarte Teilkanäle von verschiedenen Fluiden durchströmt werden können
- Fig. 8a,c: Mischplatten mit umschlossenen Ein- und Durch- trittsöffnungen und zusätzlichen Teilkanälen, wobei benachbarte Teilkanäle von verschiedenen Fluiden durchströmt werden können
- Fig. 8b: Mischplatte mit umschlossener Eintrittsöffnung und drei umschlossenen Durchtrittsöffnungen und zusätzlichen Teilkanälen, wobei benachbarte Teil- kanäle von verschiedenen Fluiden durchströmt werden können
- Fig. 9: Mikromischer mit Gehäuse und einem Stapel aus mehreren Mischplatten

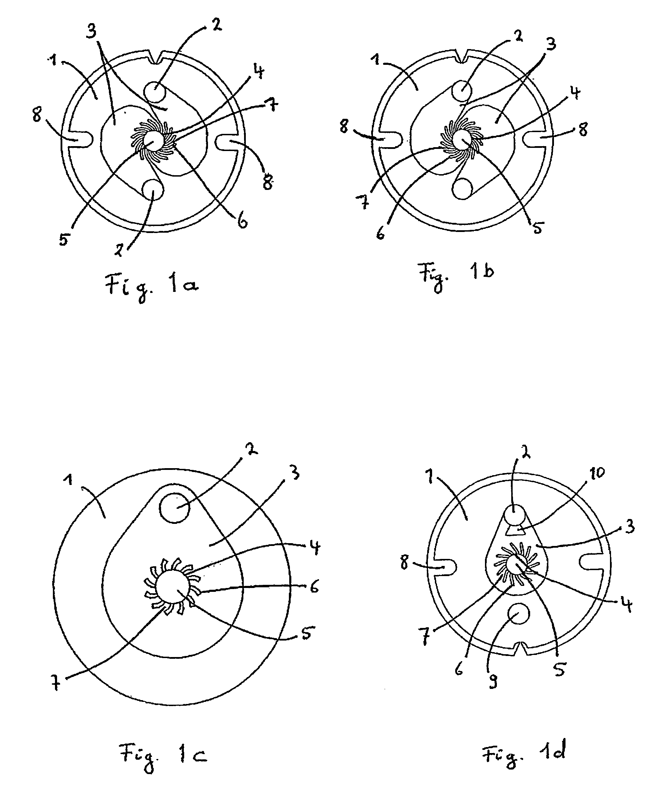

Eine Ausführungsform ist in Fig. 1a und Fig. 1b dargestellt. Die Platten (1) weisen je zwei umschlossene Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch eine Vielzahl von Mikrostruktureinheiten (6) in eine Vielzahl von Teilkanälen (7) aufgespalten. Die Teilkanäle (7) münden durch die Austrittsöffnungen (4) in eine umschlossene Mischzone (5). Die Austrittsöffnungen (4) sind auf einer kreisförmigen Linie um die Mischzone (5) herum angeordnet. Mischzone (5) und Eintrittsöffnungen (2) sind als Durchbrüche in den Platten ausgebildet. Die Mikrostruktureinheiten sind beispielhaft spiralförmig gebogen ausgebildet, wobei die Spiralen in Fig.1a und Fig. 1b entgegengesetzten Drehsinn haben. Die Mikrostruktureinheiten können aber auch geradlinig, ungebogen ausgebildet sein. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Die Platten können aber auch eckig, vorzugsweise viereckig, z.B. quadratisch ausgebildet sein. Dann können die Aussparungen und Halterungselemente entfallen. Durch die zwei Eintrittsöffnungen (2) können zwei verschiedene Fluidströme in einer Ebene der Mischzone (5) zugeführt werden, wobei die den beiden verschiedenen Fluidströmen zugeordneten Austrittsöffnungen vorzugsweise einander gegenüber liegen. Ein Mikromischer weist vorzugsweise einen Stapel von mehreren, aufeinander liegenden Bauteilen auf, wobei sich Platten gemäß Fig. 1a mit solchen gemäß Fig. 1b abwechseln und sich ein Aufbau mit alternierender Schichtstruktur ABAB usw. ergibt. Hierdurch wird erreicht, dass zwei verschiedene Fluidströme unmittelbar benachbart über- und untereinander der Mischzone (5) zugeführt werden können. In dem Stapel liegen die Platten so übereinander, dass die Eintrittsöffnungen Nebenkanäle zum Zuführen des jeweiligen Fluidstroms und die Mischzonen einen Hauptkanal zum Abführen der Mischung bilden. Über den Hauptkanal kann aber auch ein die spätere kontinuierliche Phase der Mischung bildendes Fluid zugeführt werden.

Eine weitere Ausführungsform ist in Fig. 1c dargestellt. Die Platte (1) weist eine einzige umschlossene Eintrittsöffnung (2) auf, welche mit einem in der Plattenebene durch eine Vertiefung ausgebildeten Verbindungskanal (3) verbunden ist.

Der Vertiefungskanal (3) wird durch eine Vielzahl von Mikrostruktureinheiten (6) in eine Vielzahl von Teilkanälen (7) aufgespalten. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5) und Eintrittsöffnung (2) sind als Durchbrüche in der Platte ausgebildet. Die Mikrostruktureinheiten sind beispielhaft spiralförmig gebogen ausgebildet. Die Mikrostruktureinheiten können aber auch geradlinig, ungebogen oder in beliebigen anderen geometrischen Formen ausgebildet sein. Ein Mikromischer weist vorzugsweise einen Stapel von mehreren, aufeinander liegenden Bauteilen auf. In dem Stapel liegen die Platten so übereinander, dass die Eintrittsöffnungen einen Nebenkanal zum Zuführen eines Fluidstroms und die Mischzonen einen Hauptkanal zum Abführen der Mischung bilden. Über den Hauptkanal kann eine der zu vermischenden Komponenten, vorzugsweise ein die spätere kontinuierliche Phase der Mischung bildendes Fluid zugeführt werden. Diese Ausführungsform ist z.B. besonders geeignet zur Gas/Flüssig-Extraktion. Hierbei wird die flüssige Phase über den zentralen Hauptkanal zugeführt und die Gasphase wird über den Nebenkanal zugeführt. Vorteilhafterweise kann der Plattenstapel einen Aufbau mit alternierender Schichtstruktur haben, wobei abwechselnd Platten aufeinanderliegen, die spiralförmige Mikrostruktureinheiten (6) mit entgegengesetzter Drehrichtung aufweisen. Es kann aber auch nur ein einziger Plattentyp verwendet werden. Die Mikrostruktureinheiten sind dann vorzugsweise geradlinig ausgebildet und so geformt, dass die Teilkanäle Düsen bilden.

Eine weitere Ausführungsform ist in Fig. 1d dargestellt. Die Platte (1) weist eine umschlossene Eintrittsöffnung (2), eine umschlossene Mischzone (5) und eine umschlossene Durchtrittsöffnung (9) auf. Die Eintrittsöffnung (2) ist mit einem in der Plattenebene durch eine Vertiefung ausgebildeten Verbindungskanal (3) verbunden, welcher durch eine Vielzahl von Mikrostruktureinheiten (6) in eine Vielzahl von Teilkanälen (7) aufgespalten wird. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5), Eintrittsöffnung (2) und Durchtrittsöffnung (9) sind als Durchbrüche in der Platte ausgebildet. Die Mikrostruktureinheiten sind beispielhaft spiralförmig gebogen ausgebildet. Die Mikrostruktureinheiten können aber auch geradlinig, ungebogen oder in beliebigen anderen geometrischen Formen ausgebildet sein. Mit zusätzlichen Einbauten (10) im Verbindungskanal können die Strömungsverhältnisse im Verbindungskanal (3) optimiert werden. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Ein Mikromischer weist vorzugsweise einen Stapel von mehreren, aufeinanderliegenden Bauteilen auf, wobei Platten gemäß Fig. 1d abwechselnd um 180° verdreht übereinander liegen. Hierdurch wird erreicht, dass zwei verschiedene Fluidströme unmittelbar benachbart über- und untereinander der Mischzone (5) zugeführt werden können. In dem Stapel liegen die Platten so übereinander, dass sich Eintrittsöffnungen (2) und Durchtrittsöffnungen (9) abwechseln und zwei Nebenkanäle zum Zuführen von zwei Fluidströmen bilden und die Mischzonen einen Hauptkanal zum Abführen der Mischung bilden. Über den Hauptkanal kann aber auch ein die spätere kontinuierliche Phase der Mischung bildendes Fluid zugeführt werden. Vorteilhafterweise kann der Plattenstapel einen Aufbau mit alternierender Schichtstruktur haben, wobei abwechselnd Platten aufeinanderliegen, die spiralförmige Mikrostruktureinheiten (6) mit entgegengesetzter Drehrichtung aufweisen. Es kann aber auch nur ein einziger Plattentyp verwendet werden. Die Mikrostruktureinheiten sind dann vorzugsweise geradlinig ausgebildet und so geformt, dass die Teilkanäle Düsen bilden.

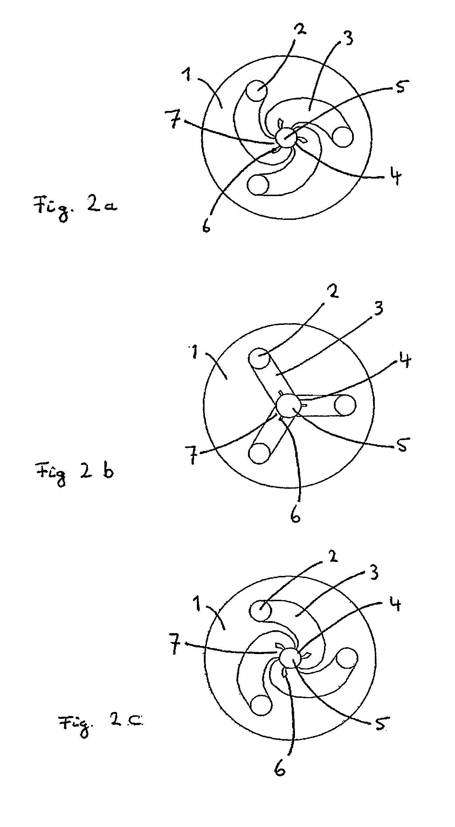

Eine weitere Ausführungsform ist in Fig. 2a bis 2c dargestellt. Die Platten (1) weisen je drei umschlossene Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch mindestens eine Mikrostruktureinheit (6) in mindestens zwei Teilkanäle (7) aufgespalten. Durch eine größere Anzahl an Mikrostruktureinbauten kann eine Aufspaltung in eine entsprechend größere Anzahl an Teilkanälen erfolgen. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5) und Eintrittsöffnungen (2) sind als Durchbrüche in den Platten ausgebildet. Die Mikrostruktureinheiten können spiralförmig mit verschiedenen Drehrichtungen oder geradlinig ausgebildet sein. Durch die drei Eintrittsöffnungen (2) können gleiche oder bis zu drei verschiedene Fluidströme in einer Ebene der Mischzone (5) zugeführt werden. Ein Mikromischer weist vorzugsweise einen Stapel von mehreren, aufeinanderliegenden Bauteilen auf, wobei sich die verschiedenen Plattentypen gemäß Fig. 2a, 2b und 2c abwechseln und sich ein Aufbau mit alternierender Schichtstruktur, z.B. ABCABC ergibt. Hierdurch wird erreicht, dass jeweils zwei verschiedene Fluidströme unmittelbar benachbart über- und untereinander der Mischzone (5) zugeführt werden können. In dem Stapel liegen die Platten so übereinander, dass die Eintrittsöffnungen Nebenkanäle zum Zuführen des jeweiligen Fluidstroms und die Mischzonen einen Hauptkanal zum Abführen der Mischung bilden. Über den Hauptkanal kann aber auch ein die spätere kontinuierliche Phase der Mischung bildendes Fluid zugeführt werden.

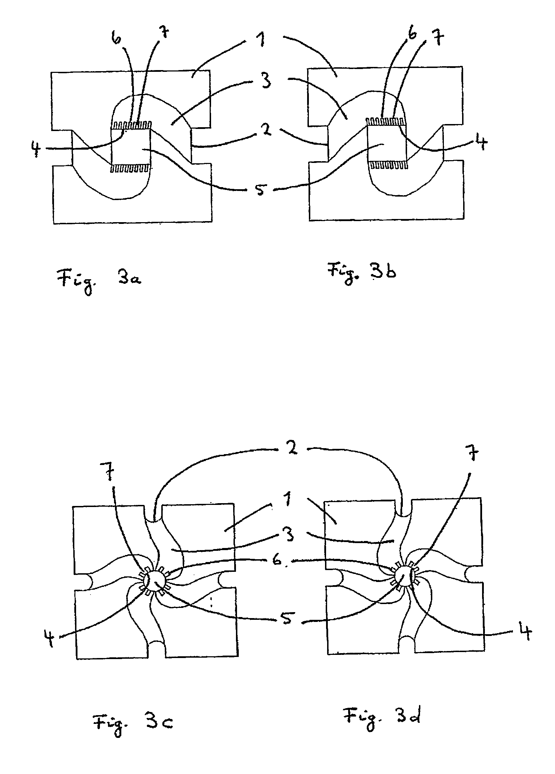

Eine weitere Ausführungsform ist in Fig. 3a und Fig. 3b dargestellt. Die Platten (1) weisen je zwei am Plattenrand positionierte Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch eine Vielzahl von Mikrostruktureinheiten (6) in eine Vielzahl von Teilkanälen (7) aufgespalten. Die Teilkanäle (7) münden durch die Austrittsöffnungen (4) in eine umschlossene Mischzone (5). Die Austrittsöffnungen (4) sind auf einer geraden Linie angeordnet. Die Mischzone (5) ist beispielhaft als rechteckiger Durchbruch in den Platten ausgebildet. Die Mikrostruktureinheiten sind beispielhaft schräg zur Fließrichtung ausgebildet, wobei die Schrägen in Fig.1a und Fig. 1b entgegengesetzte Richtung aufweisen. Die Mikrostruktureinheiten können aber auch jeweils mit gleicher oder keiner Schräge ausgebildet sein. Die Platten haben in etwa quadratische Grundform, können aber auch jede beliebige andere geometrische Grundform (eckig, rund, elliptisch etc.) haben. Durch die zwei Eintrittsöffnungen (2) können zwei verschiedene Fluidströme in einer Ebene der Mischzone (5) zugeführt werden, wobei die den beiden verschiedenen Fluidströmen zugeordneten Austrittsöffnungen bevorzugt einander gegenüber liegen. Ein Mikromischer weist vorzugsweise einen Stapel von mehreren, aufeinanderliegenden Bauteilen auf, wobei sich Platten gemäß Fig. 3a mit solchen gemäß Fig. 3b abwechseln und sich ein Aufbau mit alternierender Schichtstruktur ABAB ergibt. Hierdurch wird erreicht, dass zwei verschiedene Fluidströme unmittelbar benachbart über- und untereinander der Mischzone (5) zugeführt werden können. In dem Stapel liegen die Platten so übereinander, dass die Eintrittsöffnungen zusammen mit dem Mischergehäuse am Rand des Mischers Nebenkanäle zum Zuführen des jeweiligen Fluidstroms und die Mischzonen einen Hauptkanal im Innern des Mischers zum Abführen der Mischung bilden. Über den Hauptkanal kann aber auch ein die spätere kontinuierliche Phase der Mischung bildendes Fluid zugeführt werden.

Eine weitere Ausführungsform ist in Fig. 3c und Fig. 3d dargestellt. Die Platten (1) weisen je vier am Plattenrand positionierte Eintrittsöffnungen (2) auf. Jede Eintrittsöffnung (2) ist mit je einem, in der Plattenebene durch eine Vertiefung ausgebildeten Verbindungskanal (3) verbunden. Jeder Vertiefungskanal (3) wird durch mehrere Mikrostruktureinheiten (6) in mehrere Teilkanäle (7) aufgespalten. Die Teilkanäle (7) münden durch die Austrittsöffnungen (4) in eine umschlossene Mischzone (5). Die Austrittsöffnungen (4) sind auf einer Kreislinie angeordnet. Die Verbindungskanäle sind spiralförmig gebogen, wobei der Drehsinn der Spiralen in Fig. 3c und Fig. 3d entgegengesetzt sind. Die Mischzone (5) ist als Durchbruch in den Platten ausgebildet. Die Mikrostruktureinheiten sind beispielhaft gerade ausgebildet, können aber auch schräg oder spiralförmig gebogen sein. Die Platten haben in etwa quadratische Grundform, können aber auch jede beliebige andere geometrische Grundform (eckig, rund, elliptisch etc.) haben. Durch die vier Eintrittsöffnungen (2) können gleiche oder bis zu vier verschiedene Fluidströme in einer Ebene der Mischzone (5) zugeführt werden, wobei die verschiedenen Fluidströmen zugeordneten Austrittsöffnungen bevorzugt einander gegenüber liegen. Ein Mikromischer weist vorzugsweise einen Stapel von mehreren, aufeinanderliegenden Bauteilen auf, wobei sich Platten gemäß Fig. 3c mit solchen gemäß Fig. 3d mit entgegengesetztem Drehsinn der spiralartig gebogenen Verbindungskanäle abwechseln und sich ein Aufbau mit alternierender Schichtstruktur ABAB ergibt. Hierdurch wird erreicht, dass zwei verschiedene Fluidströme unmittelbar benachbart über- und untereinander der Mischzone (5) zugeführt werden können. In dem Stapel liegen die Platten so übereinander, dass die Eintrittsöffnungen zusammen mit dem Mischergehäuse am Rand des Mischers Nebenkanäle zum Zuführen des jeweiligen Fluidstroms und die Mischzonen einen Hauptkanal im Innern des Mischers zum Abführen der Mischung bilden. Über den Hauptkanal kann aber auch ein die spätere kontinuierliche Phase der Mischung bildendes Fluid zugeführt werden.

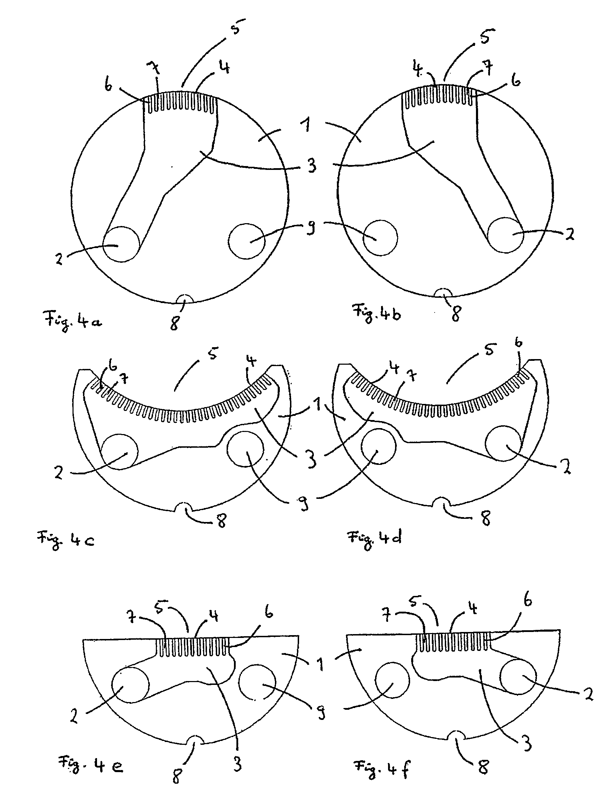

Weitere Ausführungsformen sind in Fig. 4a bis 4f dargestellt. Die Platten (1) weisen je eine umschlossene Eintrittsöffnung (2) und je eine umschlossene Durchtrittsöffnung (9) auf. Jede Eintrittsöffnung (2) ist mit je einem, in der Plattenebene durch eine Vertiefung ausgebildeten Verbindungskanal (3) verbunden. Jeder Verbindungskanal (3) wird durch eine Vielzahl von Mikrostruktureinheiten (6) in eine Vielzahl von Teilkanälen (7) aufgespalten. Die Teilkanäle (7) münden durch am Rand der Platten angeordnete Austrittsöffnungen (4) in eine außerhalb der Plattenfläche liegende Mischzone (5). Die Austrittsöffnungen (4) können auf geraden Linien (Fig. 4e, 4f) oder auf Bogensegmenten angeordnet sein, wobei die Bogensegmente konvex (Fig. 4a, 4b) oder konkav (Fig. 4c, 4d) sein können. Die Eintrittsöffnungen (2) und die Durchtrittsöffnungen (9) sind als Durchbrüche in den Platten ausgebildet. Die Mikrostruktureinheiten können parallel oder in verschiedenen Winkeln zur durch den Verbindungskanal vorgegebenen Fließrichtung angestellt sein. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Ein Mikromischer weist vorzugsweise einen Stapel von mehreren, aufeinanderliegenden Bauteilen auf, wobei sich Platten gemäß Fig. 4a mit solchen gemäß Fig. 4b, bzw. Platten gemäß Fig. 4c mit solchen gemäß Fig. 4d, bzw. Platten gemäß Fig. 4e mit solchen gemäß Fig. 4f jeweils abwechseln und sich ein Aufbau mit alternierender Schichtstruktur ABAB ergibt. Hierdurch wird erreicht, dass zwei verschiedene Fluidströme unmittelbar benachbart über- und untereinander der Mischzone (5) zugeführt werden können. Vorzugsweise sind die Winkel der Teilkanäle bei der Mündung in die Mischzone in Relation zur Umfangslinie der Mischzone in benachbarten Platten verschieden, besonders bevorzugt haben sie entgegengesetzte Abweichungen von 90°. In dem Stapel liegen die Platten so übereinander, dass sich Eintrittsöffnungen (2) und Durchtrittsöffnungen (9) abwechseln und zwei im Innern des Mischers liegende Nebenkanäle zum Zuführen von zwei Fluidströmen bilden. Die Mischzone kann mit einem Gehäuse einen Hauptkanal zum Abführen der Mischung bilden.

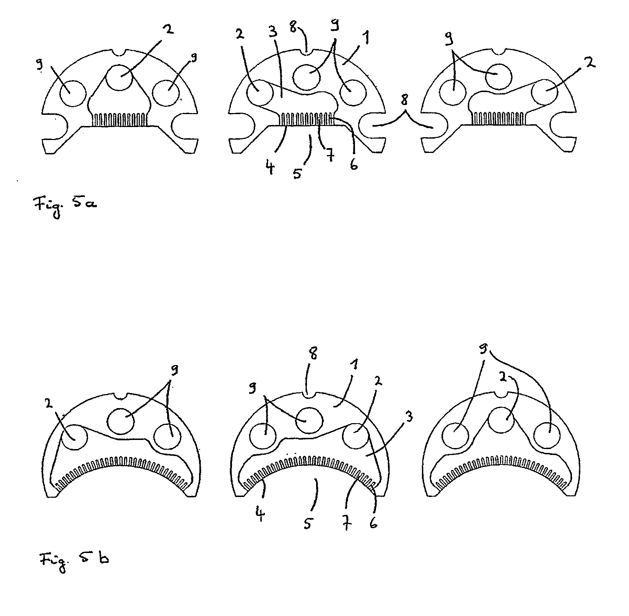

Weitere Ausführungsformen sind in Fig. 5a und Fig. 5b dargestellt. Die Platten (1) weisen je eine umschlossene Eintrittsöffnung (2) und je zwei umschlossene Durchtrittsöffnungen (9) auf. Jede Eintrittsöffnung (2) ist mit je einem, in der Plattenebene durch eine Vertiefung ausgebildeten Verbindungskanal (3) verbunden. Jeder Verbindungskanal (3) wird durch eine Vielzahl von Mikrostruktureinheiten (6) in eine Vielzahl von Teilkanälen (7) aufgespalten. Die Teilkanäle (7) münden durch am Rand der Platten angeordnete Austrittsöffnungen (4) in eine außerhalb der Plattenfläche liegende Mischzone (5). Die Austrittsöffnungen (4) können auf geraden Linien (Fig. 5a) oder auf Bogensegmenten (Fig. 5b) angeordnet sein, wobei die Bogensegmente konvex oder konkav sein können. Die Eintrittsöffnungen (2) und die Durchtrittsöffnungen (9) sind als Durchbrüche in den Platten ausgebildet. Die Mikrostruktureinheiten können parallel oder in verschiedenen Winkeln zur durch den Verbindungskanal vorgegebenen Fließrichtung angestellt sein. Wenn die Platten rund ausgebildet sind, weisen sie vorzugsweise am Rand Aussparungen (8) auf, welche mit Halterungselementen (14) in einem Gehäuse (11) zusammenwirken können, um ein Verdrehen oder Verrutschen der Platten zu vermeiden. Ein Mikromischer weist vorzugsweise einen Stapel von mehreren, aufeinander liegenden Bauteilen auf, wobei sich Platten der drei verschiedenen Typen gemäß Fig. 5a bzw. 5b jeweils abwechseln und sich ein Aufbau mit alternierender Schichtstruktur ABCABC ergibt. Hierdurch wird erreicht, dass jeweils verschiedene Fluidströme unmittelbar benachbart über- und untereinander der Mischzone (5) zugeführt werden können. Vorzugsweise sind die Winkel der Teilkanäle bei der Mündung in die Mischzone in Relation zur Umfangslinie der Mischzone in benachbarten Platten verschieden, besonders bevorzugt haben sie entgegengesetzte Abweichungen von 90°. In dem Stapel liegen die Platten (1) so übereinander, dass sich Eintrittsöffnungen (2) und Durchtrittsöffnungen (9) abwechseln und drei im Innern des Mischers liegende Nebenkanäle zum Zuführen von bis zu drei verschiedenen Fluidströmen bilden. Die Mischzone (5) kann mit einem Gehäuse einen Hauptkanal zum Abführen der Mischung bilden.

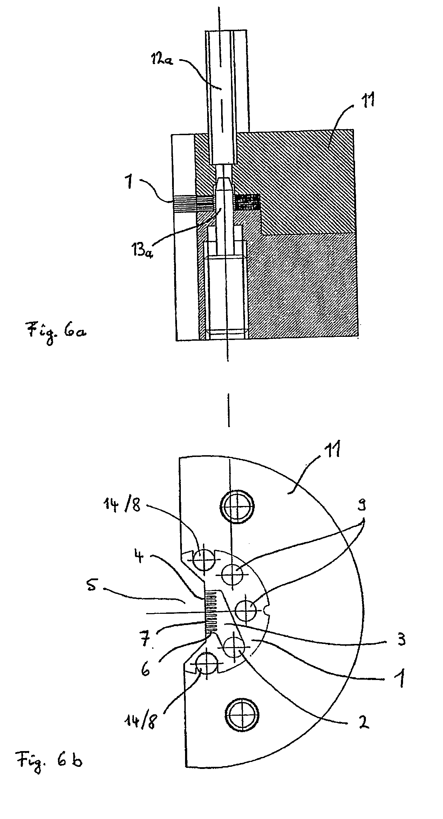

In Fig. 6a ist in Form eines Längsschnitts der schematische Aufbau einer Ausführungsform eines statischen Mikromischers dargestellt. Ein Gehäuse (11) weist Fluidzuführungen (12a) auf. In dem Gehäuse (11) ist ein Stapel aus mehreren Mischerplatten (1) enthalten. Die Ein- und/oder Durchtrittsöffnungen der Platten können mittels einer vorzugsweise senkrecht zur Plattenebene beweglichen Verschlußvorrichtung (13a) verschlossen und geöffnet werden. Mit der Verschlußvorrichtung kann auch die Strömungsgeschwindigkeit eingestellt werden. Die Mischung kann von der innerhalb des Gehäuses liegenden Mischzone über eine geeignete Fluidabführung abgeführt werden.

In Fig. 6b ist der Querschnitt eines statischen Mischers dargestellt. In einem Gehäuse (11) ist eine Mischerplatte (1) eingebaut, die mittels Aussparungen (8) und Halterungselementen (14) in Position gehalten wird. Als Mischerplatte ist beispielhaft eine solche gemäß Fig. 5a dargestellt.

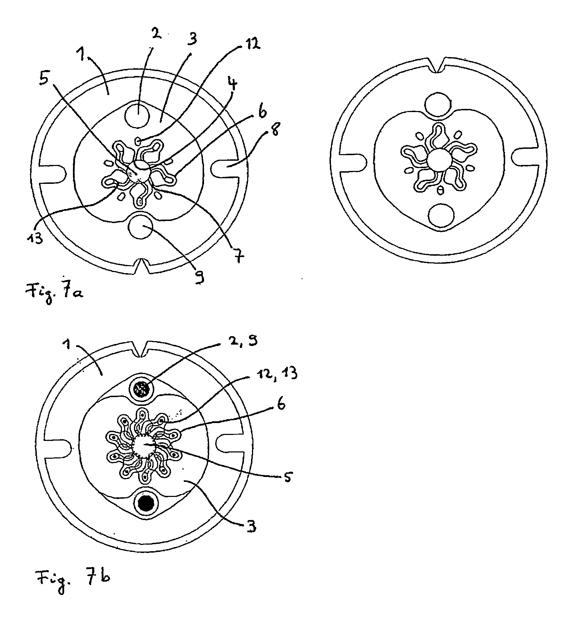

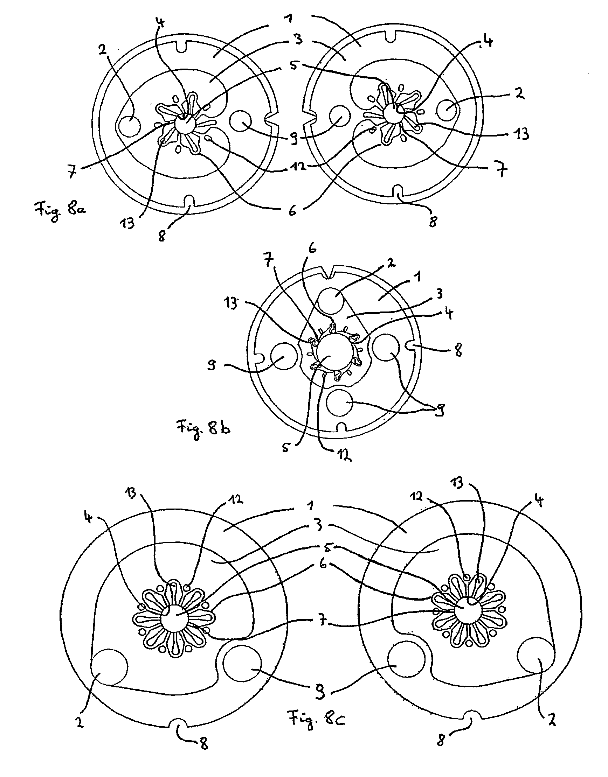

Weitere, bevorzugte Ausführungsformen sind in Fig. 7a-b und Fig. 8a-c dargestellt. Bei diesen Ausführungsformen weisen die Platten (1) nebeneinanderliegende Teilkanäle (7) und (13) auf, die abwechselnd von verschiedenen Fluidströmen durchströmt werden können und so verschiedene Fluidströme in einer Ebene unmittelbar benachbart der Mischzone (5) zugeführt werden können.

Die in Fig. 7a dargestellten Platten (1) weisen jeweils eine umschlossene Eintrittsöffnung (2), eine umschlossene Mischzone (5) und eine umschlossene Durchtrittsöffnung (9) auf. Die Eintrittsöffnung (2) ist mit einem in der Plattenebene durch eine Vertiefung ausgebildeten Verbindungskanal (3) verbunden, welcher durch eine Vielzahl von Mikrostruktureinheiten (6) in eine Vielzahl von Teilkanälen (7) aufgespalten wird. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5), Eintrittsöffnung (2) und Durchtrittsöffnung (9) sind als Durchbrüche in der Platte ausgebildet. In den Mikrostruktureinheiten (6) sind vertieft ausgebildete weitere Teilkanäle (13) integriert, welche gegenüber dem Verbindungskanal (3) abgeschirmt sind und in die Mischzone (5) münden. Die Teilkanäle (7) und die weiteren Teilkanäle (13) sind abwechselnd benachbart angeordnet. Die Platten weisen zusätzliche Durchbrüche (12) auf, wobei die Anzahl der Durchbrüche (12) und die Anzahl der zusätzlichen Teilkanäle (13) gleichgroß sind. Die Durchbrüche (12) sind so angeordnet, dass sie, wenn eine Platte (1) um 180° verdreht auf eine zweite Platte (1) gelegt wird, jeweils oberhalb der zusätzlichen Teilkanäle (13) der darunter liegenden Platte liegen. Ein durch die Eintrittsöffnung (2) in den Verbindungskanal (3) strömender Fluidstrom kann durch die Durchbrüche (12) in einen zusätzlichen Teilkanal (13) einer darunterliegenden Platte fließen. Die Winkel benachbarter Teilkanäle (7) und (13) zueinander und in Bezug auf die Umfangslinie der Mischzone können verschieden sein. In Fig. 7a haben die Winkel der Teilkanäle (7) gegenüber den Winkeln der zusätzlichen Teilkanäle (13) in Bezug auf die Umfangslinie der Mischzone (5) entgegengesetzte Abweichungen von 90°. Dadurch weisen die Austrittsöffnungen von je zwei Teilkanälen paarweise aufeinander zu. Dadurch können zwei verschiedene Fluidströme aufeinander zugeführt werden. Die Teilkanäle können aber auch parallel im rechten Winkel oder schräg zur Mischzone verlaufen. Fig. 7a zeigt nebeneinander zwei identische, um 180° verdrehte Platten (1). Fig 7b zeigt schematisch zwei um 180° verdreht aufeinandergelegte Platten. Ein Mikromischer weist vorzugsweise einen Stapel von mehreren, aufeinanderliegenden Bauteilen auf, wobei Platten gemäß Fig. 7a abwechselnd um 180° verdreht übereinander liegen. Hierdurch wird erreicht, dass zwei verschiedene Fluidströme sowohl unmittelbar benachbart über- und untereinander als auch unmittelbar benachbart nebeneinander der Mischzone (5) zugeführt werden können. In dem Stapel liegen die Platten so übereinander, dass sich Eintrittsöffnungen (2) und Durchtrittsöffnungen (9) abwechseln und zwei Nebenkanäle zum Zuführen von zwei Fluidströmen bilden und die Mischzonen einen Hauptkanal zum Abführen der Mischung bilden. Über den Hauptkanal kann aber auch ein die spätere kontinuierliche Phase der Mischung bildendes Fluid zugeführt werden. Außerdem liegen die Platten so übereinander, dass jeder zusätzliche Durchbruch (12) einer Platte mit je einem zugehörigen zusätzlichen Teilkanal (13) einer benachbarten Platte kommunizierend verbunden ist.

In Fig. 8a ist eine Ausführungsform ähnlich derjenigen der Fig. 7a dargestellt, mit dem Unterschied, dass die Teilkanäle (7) und die zusätzlichen Teilkanäle (13) parallel in gleichen Winkeln der Mischzone (5) schräg zugeführt werden. Die linke Platte der Fig. 8a unterscheidet sich dabei von der rechten Platte dadurch, dass der Winkel der Teilkanäle (7) und (13) zur Umfangslinie der Mischzone (5) eine entgegengesetzte Abweichung von 90° aufweist. Ein Mikromischer weist vorzugsweise einen Stapel von mehreren, aufeinander liegenden Bauteilen auf, wobei sich linke und rechte Platten gemäß Fig. 8a abwechseln und sich ein Aufbau mit alternierender Schichtstruktur ABAB ergibt. Hierdurch wird erreicht, dass zwei verschiedene Fluidströme unmittelbar benachbart über- und untereinander der Mischzone (5) in entgegensetzten Winkeln zugeführt werden können.

In Fig. 8c ist eine Ausführungsform ähnlich derjenigen der Fig. 8a dargestellt, mit dem Unterschied, dass die Teilkanäle (7) und die zusätzlichen Teilkanäle (13) parallel und senkrecht zur Mischzone (5) zugeführt werden. Ein Mikromischer weist vorzugsweise einen Stapel von mehreren, aufeinanderliegenden Bauteilen auf, wobei sich linke und rechte Platten gemäß Fig. 8c abwechseln und sich ein Aufbau mit alternierender Schichtstruktur ABAB ergibt. In dem Stapel liegen die Platten so übereinander, dass sich Eintrittsöffnungen (2) und Durchtrittsöffnungen (9) abwechseln und zwei Nebenkanäle zum Zuführen von zwei Fluidströmen bilden und die Mischzonen einen Hauptkanal zum Abführen der Mischung bilden. Außerdem liegen die Platten so übereinander, dass jeder zusätzliche Durchbruch (12) einer Platte mit je einem zugehörigen zusätzlichen Teilkanal (13) einer benachbarten Platte kommunizierend verbunden ist. Hierdurch wird erreicht, dass zwei verschiedene Fluidströme sowohl unmittelbar benachbart über- und untereinander als auch unmittelbar benachbart nebeneinander der Mischzone (5) zugeführt werden können.

Eine weitere Ausführungsform ist in Fig. 8b dargestellt. Eine Platte (1) weist eine umschlossene Eintrittsöffnung (2), drei umschlossene Durchtrittsöffnungen (9) und eine umschlossene Mischzone (5) auf. Die Eintrittsöffnung (2) ist mit einem in der Plattenebene durch eine Vertiefung ausgebildeten Verbindungskanal (3) verbunden, welcher durch eine Vielzahl von Mikrostruktureinheiten (6) in eine Vielzahl von Teilkanälen (7) aufgespalten wird. Die Teilkanäle (7) münden durch die Austrittsöffnungen (4) in die Mischzone (5). Die Austrittsöffnungen (4) sind auf einer kreisförmigen Linie um die Mischzone (5) herum angeordnet. Mischzone (5), Eintrittsöffnung (2) und Durchtrittsöffnung (9) sind als Durchbrüche in der Platte ausgebildet. In den Mikrostruktureinheiten (6) sind vertieft ausgebildete weitere Teilkanäle (13) integriert, welche gegenüber dem Verbindungskanal (3) abgeschirmt sind und in die Mischzone (5) münden. Die Teilkanäle (7) und die weiteren Teilkanäle (13) sind abwechselnd benachbart angeordnet. Die Platten weisen zusätzliche Durchbrüche (12) auf, wobei die Anzahl der Durchbrüche (12) und die Anzahl der zusätzlichen Teilkanäle (13) gleichgroß sind. Die Durchbrüche (12) sind so angeordnet, dass sie, wenn eine Platte (1) um 90° verdreht auf eine zweite Platte (1) gelegt wird, jeweils oberhalb der zusätzlichen Teilkanäle (13) der darunter liegenden Platte liegen. Ein durch die Eintrittsöffnung (2) in den Verbindungskanal (3) strömender Fluidstrom kann durch die Durchbrüche (12) in einen zusätzlichen Teilkanal (13) einer darunterliegenden Platte fließen. Die Winkel benachbarter Teilkanäle (7) und (13) zueinander und in Bezug auf die Umfangslinie der Mischzone können verschieden sein. In Fig. 8b haben die Winkel der Teilkanäle (7) gegenüber den Winkeln der zusätzlichen Teilkanäle (13) in Bezug auf die Umfangslinie der Mischzone (5) eine von 90° entgegengesetzte Abweichung. Dadurch weisen die Austrittsöffnungen von je zwei Teilkanäle paarweise aufeinander zu. Dadurch können zwei verschiedene Fluidströme aufeinander zugeführt werden. Die Teilkanäle können aber auch parallel im rechten Winkel oder schräg zur Mischzone verlaufen. Ein Mikromischer weist vorzugsweise einen Stapel von mehreren, aufeinanderliegenden Bauteilen auf, wobei Platten gemäß Fig. 8b in beliebiger Reihenfolge um 90°, 180° oder 270° verdreht übereinander liegen. Hierdurch wird erreicht, dass verschiedene Fluidströme sowohl unmittelbar benachbart über- und untereinander als auch unmittelbar benachbart nebeneinander der Mischzone (5) zugeführt werden können. Insgesamt können bis zu vier verschiedene Fluide mit dem Mikromischer vermischt werden. In dem Stapel liegen die Platten so übereinander, dass sich Eintrittsöffnungen (2) und Durchtrittsöffnungen (9) abwechseln und insgesamt vier Nebenkanäle zum Zuführen von bis zu vier Fluidströmen bilden und die Mischzonen einen Hauptkanal zum Abführen der Mischung bilden. Über den Hauptkanal kann aber auch ein die spätere kontinuierliche Phase der Mischung bildendes Fluid zugeführt werden. Außerdem liegen die Platten so übereinander, dass jeder zusätzliche Durchbruch (12) einer Platte mit je einem zugehörigen zusätzlichen Teilkanal (13) einer benachbarten Platte kommunizierend verbunden ist.

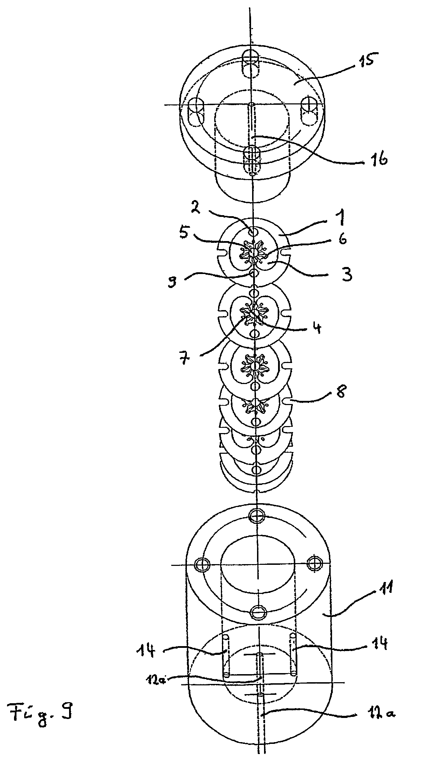

In Fig. 9 ist beispielhaft eine mögliche Ausführungsform eines erfindungsgemäß einsetzbaren statischen Mikromischers in einer Explosionsdarstellung dargestellt. Ein Gehäuse (11) enthält einen Stapel an erfindungsgemäßen Bauteilen in Form von Platten (1). Dargestellt ist beispielhaft ein Stapel aus mehreren Platten gemäß Fig. 8a, es können aber auch andere erfindungsgemäße Platten verwendet werden, wobei gegebenenfalls die Gehäuseform, Anzahl und Position der Fluidzu- und abführungen etc. anzupassen sind. Die Platten (1) werden so eingesetzt, dass die Aussparungen (8) mit den Halterungselementen (14) zusammenwirken, um ein Verdrehen der Platten zu verhindern. Das Gehäuse weist zwei Fluidzuführungen (12a) zur Zuführung der Fluide auf. Das Gehäuse kann mit einem Deckel (15) verschlossen werden, welcher eine Fluidabführung (16) aufweist.

In einer Ausführungsform kann das erfindungsgemäße Extraktionsverfahren nach dem Gegenstromprinzip durchgeführt werden, wobei die Zuführung der fluiden Phase mit geringerer Dichte unterhalb der Zuführung der fluiden Phase mit höherer Dichte erfolgt.

### Bezugszeichenliste

- 1: Platte
- 2: Eintrittsöffnung
- 3: Verbindungskanal
- 4: Austrittsöffnung
- 5: Mischzone
- 6: Mikrostruktureinheit
- 7: Teilkanal
- 8: Aussparung
- 9: Durchtrittsöffnung
- 10: Einbauten
- 11: Gehäuse
- 12: Durchbruch
- 12a: Fluidzuführung
- 13: zusätzlicher Teilkanal
- 13a: Verschlußvorrichtung
- 14: Halterungselement
- 15: Deckel
- 16: Fluidabführung

## Patentansprüche

1. Verfahren zur Durchführung von Extraktionen, wobei
- mindestens zwei nicht miteinander homogen mischbare fluide Phasen miteinander vermischt werden,
- wobei mindestens eine der Phasen mindestens einen mit der anderen Phase extrahierbaren Stoff enthält,
wobei die Vermischung unter Verwendung mindestens eines statischen Mikromischers erfolgt, welcher mindestens ein Bauteil in Form einer Platte (1) aufweist und wobei die Platte (1)
- mindestens eine Eintrittsöffnung (2) für den Eintritt mindestens eines Fluidstroms in einen in der Plattenebene liegenden Verbindungskanal (3) und mindestens eine Austrittsöffnung (4) für den Austritt des Fluidstroms in eine in der Plattenebene liegende Mischzone (5) aufweist,
- wobei die Eintrittsöffnung (2) mit den Austrittsöffnungen (4) durch den in der Plattenebene liegenden Verbindungskanal (3) kommunizierend verbunden ist und
- wobei der Verbindungskanal (3) vor der Mündung in die Mischzone (5) durch Mikrostruktureinheiten (6) in zwei oder mehr Teilkanäle (7) aufgespalten wird, wobei die Breiten der Teilkanäle im Millimeter- bis Submillimeterbereich liegen und kleiner sind als die Breite der Mischzone (5), sowie
der Mikromischer ein Gehäuse (11) mit mindestens 2 Fluidzuführungen (12a) und mindestens einer Fluidabführung (16) aufweist und das Gehäuse (11) mindestens eine oder mehrere, zu einem Stapel angeordnete plattenförmige Bauteile (1) enthält, **dadurch gekennzeichnet,**
**dass** mehrere Platten (1) eingesetzt werden, welche so übereinanderliegen, dass die Eintrittsöffnungen (2) mindestens ein Nebenkanal zum Zuführen der jeweiligen zu vermischenden
flüssigen Phase und die Mischzonen (5) zusammen einen Hauptkanal zum Abführen der vermischten Phase bilden und sich der Hauptkanal und der mindestens eine Nebenkanal durch den Stapel erstrecken und dass das Extraktionsmittel durch den Hauptkanal in und durch und die den zu extrahierenden Stoff enthaltende Phase durch den mindestens einen Nebenkanal in den Mikromischer geleitet werden.

2. Verfahren nach einem der vorhergehenden Ansprüche, **dadurch gekennzeichnet, dass** die Breiten der Teilkanäle (7) der Platten (1) an der Mündung in die Mischzone (5) 1 µm bis 2 mm betragen.

3. Verfahren nach einem der vorhergehenden Ansprüche,
**dadurch gekennzeichnet, dass** das Verhältnis der größten Breite des Verbindungskanals (3) und/oder der Breite der Eintrittsöffnung (2) zur Breite der Teilkanäle (7) der Platten (1) größer 2 ist.

4. Verfahren nach einem der vorhergehenden Ansprüche,
**dadurch gekennzeichnet, dass** das Verhältnis der Länge zur Breite der Teilkanäle (7) der Platten (1) von 1:1 bis 20:1 beträgt.

5. Verfahren nach einem der vorhergehenden Ansprüche, **dadurch gekennzeichnet, dass** das Verhältnis der Breite der Mischzone (5) zur Breite der Teilkanäle(7) der Platten (1) größer 2 ist.

6. Verfahren nach einem der vorhergehenden Ansprüche,
**dadurch gekennzeichnet, dass** die Platte (1) zusätzlich mindestens eine Durchtrittsöffnung (9) aufweist.

7. Verfahren nach einem der vorhergehenden Ansprüche,
**dadurch gekennzeichnet, dass** mindestens eine der Eintritts- (2) oder Durchtrittsöffnungen (9) oder die Mischzone (5) der Platte (1) von der Plattenebene umschlossen vorliegt und der Verbindungskanal (3) durch eine Vertiefung ausgebildet ist.

8. Verfahren nach einem der vorhergehenden Ansprüche,
**dadurch gekennzeichnet, dass** mindestens eine der Eintritts- (2) oder Durchtrittsöffnungen (9) oder die Mischzone (5) der Platte (1) am Plattenrand oder durch Ausparungen am Plattenrand angeordnet ist.

9. Verfahren nach einem der vorhergehenden Ansprüche,
**dadurch gekennzeichnet, dass** die Platte (1) mindestens zwei Eintrittsöffnungen (2) für mindestens zwei verschiedene Fluidströme aufweist, wobei jede Eintrittsöffnung (2) durch je einen Verbindungskanal (3) mit der Mischzone (5) verbunden ist.

10. Verfahren nach einem der vorhergehenden Ansprüche,
**dadurch gekennzeichnet, dass** die Platte (1) zwei Eintrittsöffnungen (2) für zwei verschiedene Fluidströme aufweist, wobei jede Eintrittsöffnung (2) durch je einen Verbindungskanal (3) mit der Mischzone (5) verbunden ist und die Austrittsöffnungen (4) der beiden Verbindungskanäle (3) einander gegenüberliegen.

11. Verfahren nach einem der vorhergehenden Ansprüche,
**dadurch gekennzeichnet, dass** die Austrittsöffnungen (4) der Platte (1) auf einer kreisförmigen Linie angeordnet sind.

12. Verfahren nach einem der vorhergehenden Ansprüche,
**dadurch gekennzeichnet, dass** die Platte (1) zusätzliche Durchbrüche (12) und in die Mikrostruktureinheiten (6) integrierte, von den Teilkanälen (7) getrennte, zusätzliche Teilkanäle (13) aufweist.

13. Verfahren nach einem der vorhergehenden Ansprüche,
**dadurch gekennzeichnet, dass** die Verbindungskanäle (3) der Platten (1) durch Vertiefungen ausgebildet sind und die Verbindungskanäle (3) vor der Mündung in die Mischzone (5) durch auf den Platten (1) angebrachten Mikrostruktureinheiten (6) in Teilkanäle (7) aufgespalten werden.

14. Verfahren nach einem der vorhergehenden Ansprüche,
**dadurch gekennzeichnet, dass** die Verbindungskanäle (3) der Platten (1) durch Ausnehmungen in den Platten (1) gebildet sind, wobei die Platten als Zwischenplatten zwischen je einer Deck- und einer Bodenplatte angeordnet sind und die Verbindungskanäle (3) vor der Mündung in die Mischzone (5) durch an den Deck- und/oder Bodenplatten angebrachten Mikrostruktureinheiten (6) in Teilkanäle (7) aufgespalten werden.

15. Verfahren nach einem der vorhergehenden Ansprüche,
**dadurch gekennzeichnet, dass** die Einströmungsgeschwindigkeit des Fluidstroms in die Mischzone (5) größer ist als die Strömungsgeschwindigkeit der Fluidmischung innerhalb der Mischzone.

16. Verfahren nach einem der vorhergehenden Ansprüche,
**dadurch gekennzeichnet, dass** in der Mischzone Mischung zumindest teilweise durch Turbulenz erfolgt.

## Claims

1. A method for performing extractions, wherein
- at least two fluid phases that are not homogeneously miscible are mixed with each other,
- wherein at least one of the phases contains a material extractable with the other phase, wherein the mixture results from the use of at least one static micro-mixer, which has at least one component in the form of a plate (1) and wherein the plate (1)
- has at least one input port (2) for the entry of at least one fluid stream into a connection channel (3) that lies in the plane of the plate and at least one discharge port (4) for the discharge of the fluid stream into a mixing zone (5) that lies in the plane of the plate,
- wherein the input port (2) is joined in communication with the discharge port (4) by means of the connection channel (3) in the plane of the plate and
- wherein the connection channel (3) is divided into two or more sub-channels (7) by means of microstructure units (6) in front of the opening into the mixing zone (5), wherein the widths of the sub-channels are in the millimeter to sub-millimeter range and are smaller than the width of the mixing zone (5), and
the micro-mixer has a housing (11) with at least 2 fluid feeds (12a) and at least one fluid discharge (16) and the housing (11) has at least one or more plate shaped components (1) arranged in a stack, **characterized in that** at several plates (1) are used which are superimposed in such a way that the input port (2) forms at least one side channel for feeding each fluid phase to be mixed and the mixing zones (5) together form a main channel for discharging the mixed phase and the main channel and the at least one side channel extend through the stack and **in that** the extraction agent is guided through the main channel into and through the phase containing the material to be extracted through the at least one side channel into the micro-mixer.

2. The method according to any of the foregoing claims, **characterized in that** the widths of the sub-channels (7) of the plates (1) are 1 µm to 2 mm at the orifice into the mixing zone (5).

3. The method according to any of the foregoing claims, **characterized in that** the ratio of the greatest width of the connecting channel (3) and/or the width of the input port (2) to the width of the sub-channels (7) of the plates (1) is greater than 2.

4. The method according to any of the foregoing claims, **characterized in that** the ratio of the length to the width of the sub-channels (7) of the plates (1) is from 1:1 to 20:1.

5. The method according to any of the foregoing claims, **characterized in that** the ratio of the width of the mixing zone (5) to the width of the sub-channels (7) of the plates (1) is greater than 2.

6. The method according to any of the foregoing claims, **characterized in that** the plate (1) additionally has at least one passage opening (9).

7. The method according to any of the foregoing claims, **characterized in that** at least one of the input ports (2) or passage openings (9) or the mixing zone (5) of the plate (1) is enclosed by the plate plane and the connecting channel (3) is formed by a depression.

8. The method according to any of the foregoing claims, **characterized in that** at least one of the input ports (2) or passage openings (9) or the mixing zone (5) of the plate (1) is arranged on the edge of the plate or by recesses on the edge of the plate.

9. The method according to any of the foregoing claims, **characterized in that** the plate (1) has at least two input ports (2) for at least two different fluid streams, wherein each input port (2) is connected in each case with the mixing zone by means of one connecting channel (3).

10. The method according to any of the foregoing claims, **characterized in that** the plate (1) has two input ports (2) for two different fluid streams, wherein each input port (2) is connected in each case with the mixing zone by means of a connecting channel (3) and the discharge port (4) of both connecting channels (3) are positioned opposite each other.

11. The method according to any of the foregoing claims, **characterized in that** the discharge ports (4) of the plate (1) are arranged in a curved line.

12. The method according to any of the foregoing claims, **characterized in that** the plate (1) additionally has openings (12) and further sub-channels (13) integrated into the micro-structure units (6) separated from the sub-channels (7).

13. The method according to any of the foregoing claims, **characterized in that** the connecting channels (3) of the plates (1) are formed by depressions and the connecting channels (3) are divided into sub-channels (7) by micro-structure units (6) affixed to the plates (1) before the inlet to the mixing zone (5).

14. The method according to any of the foregoing claims, **characterized in that** the connecting channels (3) of the plates (1) are formed by recesses in the plates (1), wherein the plates are each arranged as intermediate plates between one cover and one bottom plate and the connecting channels (3) are divided into sub-channels (7) by means of the micro-structure units (6) affixed to the cover and/or bottom plates before the input into the mixing zone (5).

15. The method according to any of the foregoing claims, **characterized in that** the input rate of the fluid stream into the mixing zone (5) is greater than the flow rate of the fluid mixture within the mixing zone.

16. The method according to any of the foregoing claims, **characterized in that**, in the mixing zone, mixing takes place at least partially by turbulence.

## Revendications

1. Procédé pour exécuter des extractions, dans lequel
- au moins deux phases fluides qui ne sont pas homogènement miscibles sont mélangées l'une avec l'autre,
- dans lequel au moins l'une des phases contient un matériau extractible avec l'autre phase,
dans lequel le mélange résulte de l'utilisation d'au moins un micro-mélangeur statique, qui a au moins un composant sous la forme d'une plaque (1) et dans lequel la plaque (1)
- a au moins un orifice d'entrée (2) pour l'entrée d'au moins un courant de fluide dans un canal de raccordement (3) qui se trouve dans le plan de la plaque et au moins un orifice de déchargement (4) pour l'écoulement du courant de fluide dans une zone de mélange (5) qui se trouve dans le plan de la plaque,
- dans lequel l'orifice d'entrée (2) est joint en communication avec l'orifice de déchargement (4) au moyen du canal de raccordement (3) dans le plan de la plaque et
- dans lequel le canal de raccordement (3) est divisé en deux ou plusieurs sous-canaux (7) au moyen d'unités de microstructure (6) à l'avant de l'ouverture dans la zone de mélange (5), dans lequel les largeurs des sous-canaux sont dans la plage du millimètre au sous-millimètre et sont inférieures à la largeur de la zone de mélange (5), et
le micro-mélangeur a un logement (11) avec au moins 2 alimentations de fluide (12a) et au moins une évacuation de fluide (16) et le logement (11) a au moins un ou plusieurs composants en forme de plaque (1) arrangés en une pile, **caractérisé en ce que** plusieurs plaques (1) sont utilisées lesquelles sont superposées d'une manière telle que l'orifice d'entrée (2) forme au moins un canal latéral pour alimenter chaque phase fluide à mélanger et les zones de mélange (5) forment ensemble un canal principal pour évacuer la phase mélangée et le canal principal et l'au moins un canal latéral s'étendent à travers la pile et **en ce que** l'agent d'extraction est guidé à travers le canal principal dans et à travers la phase contenant le matériau à extraire à travers l'au moins un canal latéral dans le micro-mélangeur.

2. Procédé selon l'une quelconque des revendications précédentes, **caractérisé en ce que** les largeurs des sous-canaux (7) des plaques (1) vont de 1 µm à 2 mm au niveau de l'orifice dans la zone de mélange (5).

3. Procédé selon l'une quelconque des revendications précédentes, **caractérisé en ce que** le rapport de la plus grande largeur du canal de raccordement (3) et/ou la largeur de l'orifice d'entrée (2) sur la largeur des sous-canaux (7) des plaques (1) est supérieur à 2.

4. Procédé selon l'une quelconque des revendications précédentes, **caractérisé en ce que** le rapport de la longueur sur la largeur des sous-canaux (7) des plaques (1) va de 1:1 à 20:1.

5. Procédé selon l'une quelconque des revendications précédentes, **caractérisé en ce que** le rapport de la largeur de la zone de mélange (5) sur la largeur des sous-canaux (7) des plaques (1) est supérieur à 2.

6. Procédé selon l'une quelconque des revendications précédentes, **caractérisée en ce que** la plaque (1) a en outre au moins une ouverture de passage (9).

7. Procédé selon l'une quelconque des revendications précédentes, **caractérisé en ce qu'**au moins un des orifices d'entrée (2) ou ouvertures de passage (9) ou la zone de mélange (5) de la plaque (1) est enclavé par le plan de plaque et le canal de raccordement (3) est formé par un creux.

8. Procédé selon l'une quelconque des revendications précédentes, **caractérisé en ce qu'**au moins un des orifices d'entrée (2) ou ouvertures de passage (9) ou la zone de mélange (5) de la plaque (1) est arrangé sur le bord de la plaque ou par des cavités sur le bord de la plaque.

9. Procédé selon l'une quelconque des revendications précédentes, **caractérisé en ce que** la plaque (1) a au moins deux orifices d'entrée (2) pour au moins deux courants de fluide différents, dans lequel chaque orifice d'entrée (2) est relié dans chaque cas à la zone de mélange au moyen d'un canal de raccordement (3).

10. Procédé selon l'une quelconque des revendications précédentes, **caractérisé en ce que** la plaque (1) a deux orifices d'entrée (2) pour deux courants de fluide différents, dans lequel chaque orifice d'entrée (2) est relié dans chaque cas à la zone de mélange (5) au moyen d'un canal de raccordement (3) et les orifices de déchargement (4) de l'un et l'autre canaux de raccordement (3) sont positionnés opposés l'un à l'autre.

11. Procédé selon l'une quelconque des revendications précédentes, **caractérisé en ce que** les orifices d'évacuation (4) de la plaque (1) sont arrangés dans une ligne courbe.

12. Procédé selon l'une quelconque des revendications précédentes, **caractérisé en ce que** la plaque (1) a en outre des ouvertures (12) et d'autres sous-canaux (13) intégrés dans les unités de micro-structure (6) séparées des sous-canaux (7).

13. Procédé selon l'une quelconque des revendications précédentes, **caractérisé en ce que** les canaux de raccordement (3) des plaques (1) sont formés par des creux et les canaux de raccordement (3) sont divisés en sous-canaux (7) par des unités de micro-structure (6) attachées aux plaques (1) avant l'entrée dans la zone de mélange (5).

14. Procédé selon l'une quelconque des revendications précédentes, **caractérisé en ce que** les canaux de raccordement (3) des plaques (1) sont formés par des cavités dans les plaques (1), dans lequel les plaques sont chacune arrangées en tant que plaques intermédiaires entre une plaque de couverture et une plaque de fond et les canaux de raccordement (3) sont divisés en sous-canaux (7) au moyen des unités de micro-structure (6) attachées aux plaques de couverture et/ou de fond avant l'entrée dans la zone de mélange (5).

15. Procédé selon l'une quelconque des revendications précédentes, **caractérisé en ce que** le débit d'entrée du courant de fluide dans la zone de mélange (5) est supérieur au débit du mélange de fluide au sein de la zone de mélange.

16. Procédé selon l'une quelconque des revendications précédentes, **caractérisé en ce que**, dans la zone de mélange, le mélange a lieu au moins partiellement par turbulence.
